# EUROPÄISCHE PATENTSCHRIFT

(11) **EP 1 308 680 B1**
(45) Veröffentlichungstag und Bekanntmachung des Hinweises auf die Patenterteilung: **07.06.2006**
(21) Anmeldenummer: 02023333.4
(22) Anmeldetag: 18.10.2002
(51) Int. Cl.: F25J 3/04

(54) **Verfahren und Vorrichtung zur Gewinnung von Krypton und/oder Xenon durch Tieftemperaturzerlegung von Luft**
Process and system for production of krypton and/or xenon by cryogenic air separation
Procédé et dispositif de production de krypton et/ou xénon par distillation cryogénique de l'air

(30) Priorität: 31.10.2001 DE 10153252; 18.01.2002 EP 02001356
(43) Veröffentlichungstag der Anmeldung: 07.05.2003
(73) Patentinhaber: Linde AG, 65189 Wiesbaden (DE)
(72) Erfinder: Schwenk, Dirk, Dr., 85609 Aschheim (DE)
(74) Vertreter: Imhof, Dietmar

(56) Entgegenhaltungen:
- EP-A- 1 006 326
- DE-A- 2 605 305
- DE-A- 10 000 017
- US-A- 5 067 976
- US-B1- 6 314 757

## Beschreibung

Die Erfindung betrifft ein Verfahren gemäß dem Oberbegriff des Patentanspruchs 1, das zur Gewinnung von Krypton und/oder Xenon durch Tieftemperaturzerlegung von Luft dient.

Die Grundlagen der Tieftemperaturzerlegung von Luft im Allgemeinen sowie der Aufbau von Rektifiziersystemen zur Stickstoff-Sauerstoff-Trennung im Speziellen sind in der Monografie "Tieftemperaturtechnik" von Hausen/Linde (2. Auflage, 1985) und in einem Aufsatz von Latimer in Chemical Engineering Progress (Vol. 63, No.2, 1967, Seite 35) beschrieben. Die Hochdrucksäule wird unter einem höheren Druck als die Niederdrucksäule betrieben; die beiden Säulen stehen vorzugsweise in Wärmeaustauschbeziehung zueinander, beispielsweise über einen Hauptkondensator, in dem Kopfgas der Hochdrucksäule gegen verdampfende Sumpfflüssigkeit der Niederdrucksäule verflüssigt wird. Das Rektifiziersystem der Erfindung kann als klassisches Doppelsäulensystem ausgebildet sein, aber auch als Drei- oder Mehrsäulensystem. Zusätzlich zu den Kolonnen zur Stickstoff-Sauerstoff-Trennung können weitere Vorrichtungen zur Gewinnung anderer Luftkomponenten, insbesondere von Edelgasen aufweisen, beispielsweise eine Argongewinnung.

Ein Verfahren zur Gewinnung von Krypton und/oder Xenon durch Tieftemperaturzerlegung von Luft und eine entsprechende Vorrichtung sind aus DE 10000017 A1 bekannt. Hier wird eine krypton- und xenonhaltige Fraktion, nämlich die Sumpfflüssigkeit, aus der Hochdrucksäule der Doppelsäule zur Stickstoff-Sauerstoff-Trennung ohne konzentrationsverändernde Maßnahmen in eine weitere Säule geführt, die zur Krypton-Xenon-Gewinnung dient.

DE 2605305 A zeigt ein Verfahren und eine Vorrichtung zur Gewinnung von Krypton und/oder Xenon durch Tieftemperaturzerlegung von Luft der eingangs genannten Art. Hier wird der erste Kondensator-Verdampfer, mit kondensierendem Kopfgas einer Rohargonsäule beheizt und stellt gleichzeitig die Sumpfheizung der Krypton-Xenon-Anreicherungssäule dar. Sämtlicher Dampf, der in der Krypton-Xenon-Anreicherungssäule aufsteigt, wird in dem ersten Kondensator-Verdampfer erzeugt.

Der Erfindung liegt die Aufgabe zugrunde, die Krypton- und Xenon-Gewinnung weiter zu verbessern und insbesondere auf besonders wirtschaftliche Weise durchzuführen.

Diese Aufgabe wird dadurch gelöst, dass eine Flüssigkeit aus dem unteren Bereich der Krypton-Xenon-Anreicherungssäule in einen zweiten Kondensator-Verdampfer eingeleitet wird, der vom ersten Kondensator-Verdampfer getrennt ist.

Bei der Erfindung ist also ein separater Wärmetauscher, der "zweite Kondensator-Verdampfer", vorgesehen, in dem unabhängig vom ersten Kondensator-Verdampfer aufsteigender Dampf für die Krypton-Xenon-Anreicherungssäule erzeugt und damit eine weitere Aufkonzentrierung an Schwererflüchtigen vorgenommen wird. Der zweite Kondensator-Verdampfer ist vorzugsweise als Sumpfheizung der Krypton-Xenon-Anreicherungssäule ausgebildet. Er kann innerhalb dieser Säule oder in einem separaten Behälter angeordnet sein.

Durch den zweiten Kondensator-Verdampfer stellt sich im ersten Kondensator-Verdampfer eine weniger hohe Sauerstoffkonzentration ein, sodass durch die entsprechend verringerte Temperaturdifferenz die Baugröße des ersten Kondensator-Verdampfers verkleinert werden kann. Außerdem tritt eine weniger starke Aufkonzentrierung von Schwererflüchtigen im ersten Kondensator-Verdampfer auf, die an dieser Stelle aus betriebstechnischen Gründen unerwünscht ist. Im Rahmen der Erfindung ist man frei in der Wahl des Heizmittels für den zweiten Kondensator-Verdampfer. Grundsätzlich kann jede geeignete Prozessfraktion eingesetzt werden, beispielsweise Stickstoff, etwa aus der Hochdrucksäule, jede andere Fraktion aus der Hochdrucksäule, ein Teilstrom der Einsatzluft oder einer Fraktion aus einer mit der Niederdrucksäule verbundenen Rohargonsäule, insbesondere Rohargon vom Kopf einer derartigen Rohargonsäule.

Die "Spülflüssigkeit" des ersten Kondensator-Verdampfers dient als eine Einsatzfraktion der Krypton-Xenon-Anreicherungssäule. Unter "Krypton-Xenon-Anreicherungssäule" wird hier eine Gegenstrom-Stoffaustausch-Säule verstanden, in der eine Fraktion erzeugt wird, die eine höhere Konzentration an Krypton und/oder Xenon als jede der Einsatzfraktionen dieser Säule aufweist. Zum Beispiel weist das Krypton-Xenon-Konzentrat einen höheren molaren Gehalt an Krypton und/oder Xenon auf als die "Spülflüssigkeit", die in die Krypton-Xenon-Anreicherungssäule eingespeist wird. Diese Säule kann beispielsweise als Austauschsäule realisiert sein wie in DE 10000017 A1 und/oder gleichzeitig zur Methan-Ausschleusung dienen.

Vorzugsweise wird die Spülflüssigkeit im unteren Bereich eingeführt, etwa unmittelbar über dem Sumpf. Auf den Kopf der Krypton-Xenon-Anreicherungssäule wird in diesem Fall eine Flüssigkeit aufgegeben, um das im aufsteigenden Dampf vorhandene Krypton nach unten und Methan nach oben zu treiben. Diese Flüssigkeit kann zum Beispiel aus der Hochdrucksäule entnommen werden, etwa aus deren Sumpf oder einige Böden oberhalb. Eine mögliche alternative oder zusätzliche Quelle ist der Verdampfungsraum des Kopfkondensators einer Reinargonsäule. Im Sumpf der Krypton-Xenon-Anreicherungssäule kann die herabströmende Flüssigkeit mittels eines Sumpfverdampfers aufgekocht werden. Dadurch kann der Krypton- und Xenon-Gehalt des Krypton-Xenon-Konzentrats weiter erhöht werden. Der Sumpfverdampfer kann beispielsweise mit Druckluft oder mit Druckstickstoff vom Kopf der Hochdrucksäule betrieben werden.

Bei der Erfindung wird zwischen dem Abzug der krypton- und xenonhaltigen Fraktion aus der Hochdrucksäule und der Einspeisung in die Krypton-Xenon-Anreicherungssäule ein Zwischenschritt in Form einer partiellen Verdampfung in dem ersten Kondensator-Verdampfer vorgenommen. Dieser Schritt dient zu einer Konzentrierung an Krypton und/oder Xenon bereits vor der Krypton-Xenon-Anreicherungssäule. Als weiteren Effekt werden auch alle anderen schwerer als Sauerstoff flüchtigen Komponenten mit der Spülflüssigkeit aus der partiellen Verdampfung in die Krypton-Xenon-Anreicherungssäule geführt und damit von anderen Anlagenteilen, insbesondere der Niederdrucksäule femgehalten.

Das Krypton-Xenon-Konzentrat, das in der Krypton-Xenon-Anreicherungssäule erzeugt wird, weist einen Kryptongehalt von beispielsweise 600 bis 5000 ppm, vorzugsweise 1200 bis 4000 ppm, einen Xenongehalt von beispielsweise 60 bis 500 ppm, vorzugsweise 120 bis 400 ppm. Im Übrigen besteht es hauptsächlich aus Sauerstoff und typischerweise zu etwa 10 mol% aus Stickstoff.

Die Erfindung lässt sich besonders vorteilhaft im Rahmen einer Luftzerlegungsanlage mit Argongewinnung realisieren, bei der eine argonhaltige Fraktion aus der Niederdrucksäule in eine Rohargonrektifikation eingeleitet wird. Die Rohargonrektifikation dient insbesondere zur Argon-Sauerstoff-Trennung und kann in einer oder mehren Säulen durchgeführt werden (siehe zum Beispiel EP 377117 B2 oder EP 628777 B1).

Die ohnehin notwendige Kühlung der Rohargonrektifikation wird im Rahmen der Erfindung durch die krypton- und xenonhaltige Fraktion betrieben, wobei ein argonangereicherter Dampf aus der Rohargonrektifikation in dem ersten Kondensator-Verdampfer in indirekten Wärmeaustausch mit der verdampfenden krypton- und xenonhaltigen Fraktion tritt. Die partielle Verdampfung im Rahmen der Krypton-Xenon-Gewinnung dient also gleichzeitig zur Erzeugung von Rücklauf und/oder Flüssigprodukt in der Rohargonrektifikation.

In vielen Fällen ist ein flüssiger Einsatzluftstrom vorhanden, beispielsweise bei der Innenverdichtung eines oder mehrerer Produkte. Häufig wird die verflüssigte Luft zwischen Hochdrucksäule und Niederdrucksäule aufgeteilt, zum Beispiel indem sie in eine Tasse eingeleitet wird, die innerhalb der Hochdrucksäule angeordnet ist und von dieser Tasse aus ein Teil der Flüssigluft wieder entnommen und zur Niederdrucksäule geführt wird. Im Rahmen der Erfindung ist es günstig, wenn stattdessen eine sauerstoffhaltige Flüssigkeit aus der Hochdrucksäule abgezogen und in die Niederdrucksäule eingeführt wird, die von einer zweiten Zwischenstelle stammt, die oberhalb der ersten Zwischenstelle angeordnet ist, an der die flüssige Einsatzluft in die Hochdrucksäule eingeführt wird. Hierdurch wird sichergestellt, dass das in der flüssigen Einsatzluft enthaltene Krypton und Xenon Richtung Sumpf der Hochdrucksäule strömt und nicht in die Niederdrucksäule geleitet wird, wo es für die Krypton-Xenon-Gewinnung verloren wäre. Außerdem werden andere schwererflüchtige Verunreinigungen vom Hauptkondensator femgehalten. Die Flüssigluft (oder eine sauerstoffhaltige Flüssigkeit ähnlicher Zusammensetzung) wird gemäß diesem Aspekt der Erfindung durch weit gehend Krypton- und Xenon-freie Rücklaufflüssigkeit der Hochdrucksäule gebildet.

Dieser Aspekt der Erfindung ist bei jedem Verfahren mit Vorteil anzuwenden, bei dem eine Fraktion aus der Hochdrucksäule eine Krypton-Xenon-Gewinnung zugeführt wird.

Seine Anwendung ist nicht auf Verfahren und Vorrichtungen mit partieller Verdampfung der krypton- und xenonhaltige Fraktion beschränkt. Dasselbe gilt für die entsprechenden weiteren Ausgestaltungen.

Vorzugsweise sind zwischen der ersten und der zweiten Zwischenstelle keine Stoffaustauschelemente angeordnet, also weder Böden noch Packung. Damit hat die sauerstoffhaltige Flüssigkeit im Wesentlichen die gleiche Zusammensetzung wie die Luft - bis auf die unerwünschten Komponenten die schwerer als Sauerstoff sieden.

In der Drucksäule können Sperrböden angeordnet sein, wobei die krypton- und xenonhaltige Fraktion unterhalb der Sperrböden abgezogen wird und eine sauerstoffangereicherte Flüssigkeit oberhalb der Sperrböden entnommen wird. Die sauerstoffangereicherte Flüssigkeit ist damit wesentlich ärmer an Krypton und Xenon als die krypton- und xenonhaltige Fraktion und kann beispielsweise direkt in die Niederdrucksäule geleitet werden und/oder zur Kühlung des Kopfkondensators einer Reinargonsäule verwendet werden, ohne dass dadurch nennenswerte Mengen an Krypton und Xenon verloren gehen. Die Anzahl der Sperrböden beträgt beispielsweise eins bis neun, vorzugsweise zwei bis sechs (theoretische Böden).

Zusätzlich zu der Spülflüssigkeit kann ein gasförmiger Strom aus dem Verdampfungsraum des ersten Kondensator-Verdampfers abgezogen und ebenfalls der Krypton-Xenon-Anreicherungssäule zugeleitet werden, beispielsweise an derselben Stelle wie die Spülflüssigkeit. Damit wird auch das in dem verdampften Teil der krypton- und xenonhaltigen Fraktion noch enthaltene Krypton der Krypton-Xenon-Gewinnung zugeführt.

Kälte kann bei dem Verfahren durch arbeitsleistende Entspannung von Luftbeispielsweise in einer Mitteldruckturbine - auf etwa den Betriebsdruck der Hochdrucksäule erzeugt werden, wobei regelmäßig eine Teilverflüssigung der Luft auftritt. Im Rahmen der Erfindung kann diese arbeitsleistend entspannte Luft einer Phasentrennung zugeführt werden, und mindestens ein Teil des flüssigen Anteils aus der Phasentrennung kann der Krypton-Xenon-Anreicherungssäule beziehungsweise dem Verdampfungsraum des ersten Kondensator-Verdampfers zugeleitet werden.

Alternativ oder zusätzlich kann Luft arbeitsleistend auf etwa Niederdrucksäulen-Druck entspannt werden, zum Beispiel in einer Niederdruckturbine. Das in dem Niederdruck-Luftstrom enthaltene Krypton und Xenon kann zurückgewonnen werden, wenn dieser Luftstrom einer Strippsäule zugeführt wird, und die Sumpfflüssigkeit der Strippsäule der Krypton-Xenon-Anreicherungssäule zugeleitet wird, vorzugsweise am Kopf oder an einer Zwischenstelle einige Böden darunter. Außerdem werden in der Strippsäule auch andere schwererflüchtige Komponenten wie N₂O zurückgehalten, die in der Niederdrucksäule unerwünscht sind.

Die Vorteile der mit der arbeitsleistenden Entspannung von Luft verbundenen Aspekte der Erfindung sind nicht auf Verfahren und Vorrichtungen mit partieller Verdampfung der krypton- und xenonhaltige Fraktion beschränkt. Diese Verfahrensschritte können vielmehr auch bei anderen Verfahren zur Krypton-Xenon-Gewinnung eingesetzt werden.

Die Erfindung betrifft außerdem eine Vorrichtung zur Gewinnung von Krypton und/oder Xenon durch Tieftemperaturzerlegung von Luft gemäß den Patentansprüchen 9 und 10.

Die Erfindung sowie weitere Einzelheiten der Erfindung werden im Folgenden anhand von in den Zeichnungen schematisch dargestellten Ausführungsbeispielen näher erläutert. Hierbei zeigen:
- Figur 1: ein erstes Ausführungsbeispiel der Erfindung,
- Figur 2: eine Abwandlung mit Sperrböden in der Hochdrucksäule,
- Figur 3: ein weiteres Ausführungsbeispiel mit Mitteldruckturbine,
- Figur 4: ein viertes Ausführungsbeispiel mit Niederdruckturbine und
- Figur 5: eine weitere Variante mit einer Turbine zwischen Hochdrucksäule und Niederdrucksäule.

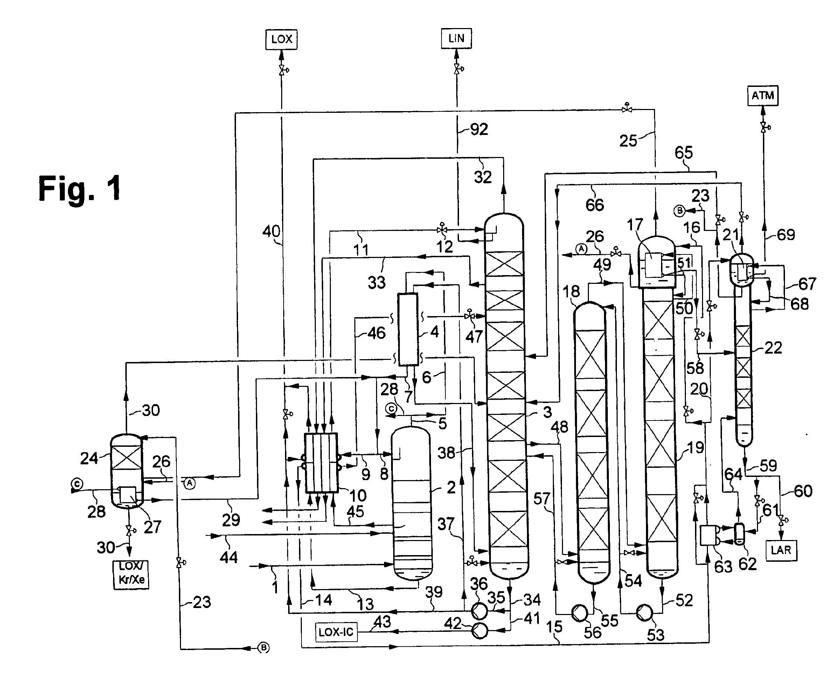

Über Leitung 1 von **Figur 1** strömt gereinigte und auf etwa Taupunkt abgekühlte Luft gasförmig in die Hochdrucksäule 2 eines Rektifiziersystems zur Stickstoff-Sauerstoff-Trennung ein, das außerdem eine Niederdrucksäule 3 und einen Hauptkondensator 4 aufweist, der in dem Beispiel als Fallfilmverdampfer ausgebildet ist. Gasförmiger Stickstoff 5 vom Kopf der Hochdrucksäule wird zu einem ersten Teil 6 dem Kondensationsraum des Hauptkondensators 4 zugeleitet. Das dort gebildete Kondensat 7 wird zu einem ersten Teil 8 der Hochdrucksäule als Rücklauf aufgegeben. Ein zweiter Teil 9 wird in einem Unterkühlungs-Gegenströmer 10 unterkühlt und über Leitung 11 und Drosselventil 12 der Niederdrucksäule 3 am Kopf zugeführt. Ein Teil 92 dieser Flüssigkeit kann als flüssiges Stickstoffprodukt (LIN) gewonnen werden.

Die sauerstoffangereicherte Sumpfflüssigkeit 13 der Hochdrucksäule 2 wird ebenfalls im Unterkühlungs-Gegenströmer 10 abgekühlt. Die unterkühlte sauerstoffangereicherte Flüssigkeit 14 wird in zwei Teilströmen weitergeführt. Der erste Teilstrom 15 - 16 wird als "krypton- und xenonhaltige Fraktion" in den Verdampfungsraum eines "ersten Kondensator-Verdampfers" 17 eingeleitet, der den Kopfkondensator einer Rohargonrektifikation 18/19 darstellt. Ein zweiter Teilstrom 15 - 20 wird in den Verdampfungsraum eines Kopfkondensators 21 einer Reinargonsäule 22 eingespeist.

Der erste Kondensator-Verdampfer 17 ist als Umlaufverdampfer ausgebildet, das heißt der Verdampfungsraum enthält ein Flüssigkeitsbad, in das ein Wärmetauscherblock zum Beispiel teilweise eingetaucht ist. (Vorzugsweise ist der Wärmetauscherblockabweichend von der zeichnerischen Darstellung - vollständig in das Flüssigkeitsbad eingetaucht.) Flüssigkeit wird durch den Thermosiphon-Effekt am unteren Ende der Verdampfungspassagen angesaugt. An deren oberem Ende tritt ein Gemisch aus Dampf und unverdampfter Flüssigkeit aus, wobei letztere in das Flüssigkeitsbad zurückströmt. Im ersten Kondensator-Verdampfer 17 wird die krypton- und xenonhaltige Fraktion 16 partiell verdampft; beispielsweise 0,5 bis 10 mol%, vorzugsweise 1 bis 5 mol% der eingeführten Flüssigkeit 16 werden flüssig als Spülflüssigkeit 26 aus dem Verdampfungsraum des ersten Kondensator-Verdampfers 17 abgezogen. Durch diese partielle Verdampfung wird die Konzentration von schwererflüchtigen Komponenten, insbesondere von Krypton und Xenon, in der Flüssigkeit erhöht und im Dampf vermindert (jeweils im Vergleich zur Zusammensetzung der krypton- und xenonhaltigen Fraktion 16). Der bei der partiellen Verdampfung erzeugte Dampf wird als gasförmiger Strom 25 aus dem Verdampfungsraum des ersten Kondensator-Verdampfers 17 abgezogen. Verbleibende Flüssigkeit wird als "Spülflüssigkeit" 26 aus dem Flüssigkeitsbad abgeführt und der Krypton-Xenon-Anreicherungssäule 24 unmittelbar oberhalb des Sumpfs zugeleitet.

Die Krypton-Xenon-Anreicherungssäule 24 weist einen Sumpfverdampfer ("zweiter Kondensator Verdampfer") 27 auf, der mit jeder geeigneten Fraktion beheizt werden kann. In dem Ausführungsbeispiel wird Druckstickstoff 28 vom Kopf der Hochdrucksäule 2 als Heizmittel verwendet. (Alternativ dazu könnte jede andere Fraktion aus der Hochdrucksäule, ein Teilstrom der Einsatzluft oder ein Teil des Rohargons 50 vom Kopf der zweiten Rohargonsäule 19 eingesetzt werden.) Der in dem Sumpfverdampfer 27 verflüssigte Stickstoff 29 wird mit der Flüssigkeit 7 aus dem Hauptkondensator 4 vermischt. Als Rücklaufflüssigkeit wird ein Teilstrom 23 der Spülflüssigkeit aus dem Verdampfer des Kopfkondensators 21 der Reinargonsäule 22 auf den Kopf der Krypton-Xenon-Anreicherungssäule 24 aufgegeben. Der aus dem Sumpfverdampfer 27 aufsteigende Dampf tritt in der Krypton-Xenon-Anreicherungssäule in Gegenstrom-Stoffaustausch mit der Flüssigkeit 23, die ärmer an Krypton und Xenon ist. Dadurch werden diese Komponenten in den Sumpf gewaschen, wogegen Methan zum größten Teil mit dem Kopfgas 30 ausgeschleust wird. Letzteres wird in dem Ausführungsbeispiel der Niederdrucksäule 3 an einer geeigneten Zwischenstelle zugespeist. Vom Sumpf der Krypton-Xenon-Anreicherungssäule 24 wird ein Krypton-Xenon-Konzentrat 30 in flüssiger Form entnommen (LOX/Kr/Xe), das beispielsweise einen Krypton-Gehalt von etwa 2400 ppm und einen Xenon-Gehalt von etwa 200 ppm enthält: Im Übrigen besteht das Konzentrat 30 hauptsächlich aus Sauerstoff und enthält noch etwa 10 mol% Stickstoff. Das Konzentrat 30 kann in einem Flüssigtank gespeichert oder direkt einer Weiterverarbeitung zur Gewinnung von reinem Krypton und/oder Xenon zugeführt werden.

Von der Niederdrucksäule 3 werden neben dem Flüssigstickstoff 92 reiner gasförmiger Stickstoff 32 am Kopf, Unreinstickstoff 33 ebenfalls in Gasform sowie Sauerstoff 34 in flüssiger Form mindestens teilweise als Produkte abgezogen. Die gasförmigen Produkte 32, 33 werden im Unterkühlungs-Gegenströmer 10 und weiter in einem nicht dargestellten Hauptwärmetauscher angewärmt. Der flüssige Sauerstoff 34 wird in insgesamt drei Teile aufgeteilt. Ein erster und ein zweiter Teil werden zunächst gemeinsam über Leitung 35 und Pumpe 36 gefördert. Der erste Teil 37 strömt zum Verdampfungsraum des Hauptkondensators 4 und wird dort teilweise verdampft. Das dabei gebildete Dampf-Flüssigkeitsgemisch 38 fließt zum Sumpf der Niederdrucksäule 3 zurück. Über die Leitungen 39 und 40 wird der zweite Teil als Flüssigprodukt (LOX) abgezogen, gegebenenfalls nach Unterkühlung im Unterkühlungs-Gegenströmer 10.

Der dritte Teil 41 des flüssigen Sauerstoffs 34 vom Sumpf der Niederdrucksäule 3 wird einer Innenverdichtung (internal compression) unterzogen, indem er in einer Pumpe 42 auf den gewünschten Produktdruck gebracht und über Leitung 43 (LOX - IC) einem oder mehreren Wärmetauschern zugeführt wird, in dem oder denen er verdampft (beziehungsweise - bei überkritischem Produktdruck - pseudo-verdampft) und auf etwa Umgebungstemperatur angewärmt wird. Verdampfung und Anwärmung können beispielsweise in indirektem Wärmeaustausch mit einem Hochdruckluftstrom durchgeführt werden. Die dabei verflüssigte (oder überkritische) Hochdruckluft wird entspannt (nicht dargestellt) und als Flüssigluft 44 der Hochdrucksäule 2 an einer "ersten Zwischenstelle" zugeleitet. Von einer "zweiten Zwischenstelle", die unmittelbar oberhalb dieser ersten Zwischenstelle angeordnet ist, wird eine sauerstoffhaltige Flüssigkeit 45 aus der Hochdrucksäule abgezogen, deren Menge mindestens einem Teil der Flüssigluft 44 entspricht; der Strom 45 kann auch größer als der Strom 44 sein. Zwischen der ersten und der zweiten Zwischenstelle befinden sich keine Böden oder sonstigen Stoffaustauschelemente. Die sauerstoffhaltige Flüssigkeit 45, deren Zusammensetzung weitgehend der Luft entspricht, wird nach Unterkühlung im Unterkühlungs-Gegenströmer 10 über Leitung 46 und Drosselventil 47 in die Niederdrucksäule 3 eingespeist.

Über eine Argonübergangs-Leitung 48 wird eine argonhaltige Fraktion aus der Niederdrucksäule 3 in eine Rohargonrektifikation geleitet, die in dem Beispiel in zwei seriell verbundenen Rohargonsäulen 18 und 19 durchgeführt wird. Die argonhaltige Fraktion 48 wird der ersten Rohargonsäule 18 ummittelbar über dem Sumpf gasförmig zugeleitet. Der aufsteigende Dampf reichert sich an Argon an. Das Kopfgas der ersten Rohargonsäule 18 strömt über Leitung 49 weiter zum Sumpf der zweiten Rohargonsäule 19.

Am Kopf der zweiten Rohargonsäule 19 wird argonangereicherter Dampf (Rohargon) 50 erzeugt und in dem ersten Kondensator-Verdampfer 17 zum großen Teil kondensiert. Die dabei erzeugte Flüssigkeit 51 wird als Rücklaufflüssigkeit auf die zweite Rohargonsäule 19 aufgegeben. Die im Sumpf der zweiten Rohargonsäule 19 anfallende Flüssigkeit 52 wird mittels einer Pumpe 53 über Leitung 54 zum Kopf der ersten Rohargonsäule 18 gefördert. Sumpfflüssigkeit 55 der ersten Rohargonsäule 18 strömt über ein weitere Pumpe 56 und Leitung 57 in die Niederdrucksäule 3 zurück.

Gasförmig verbliebenen Rohargon 58 aus dem Verflüssigungsraum des ersten Kondensator-Verdampfers 17 wird in der Reinargonsäule weiter zerlegt, insbesondere von leichterflüchtigen Bestandteilen wie Stickstoff befreit. Reinargonprodukt (LAR) wird über die Leitungen 59 und 60 in flüssiger Form abgezogen. Ein anderer Teil 61 der Sumpfflüssigkeit wird in einem Reinargon-Verdampfer 63 mit angeschlossenem Abscheider 62 verdampft und über Leitung 64 als aufsteigender Dampf in die Reinargonsäule 22 zurückgeleitet. Der Reinargon-Verdampfer 63 wird durch indirekten Wärmeaustausch mit mindestens einem Teil der Sumpfflüssigkeit 15 der Hochdrucksäule 2 beheizt, die bei dem Wärmeaustausch unterkühlt wird. Der Kopfkondensator 21 der Reinargonsäule wird wie bereits beschrieben mit einem Teil 20 dieser unterkühlten Flüssigkeit gekühlt. Aus dem Verdampfungsraum des Kopfkondensators 21 werden Dampf 66 und verbliebene Flüssigkeit 23, 65 abgezogen und an geeigneten Zwischenstellen in die Niederdrucksäule 3 eingespeist beziehungsweise (23) auf die Krypton-Xenon-Anreicherungssäule 24 aufgegeben. Im Verflüssigungsraum kondensiert Kopfgas 67 der Reinargonsäule 22 partiell. Dabei erzeugte Rücklaufflüssigkeit 68 wird auf die Reinargonsäule aufgegeben. Restdampf 69 wird in die Atmosphäre abgeblasen.

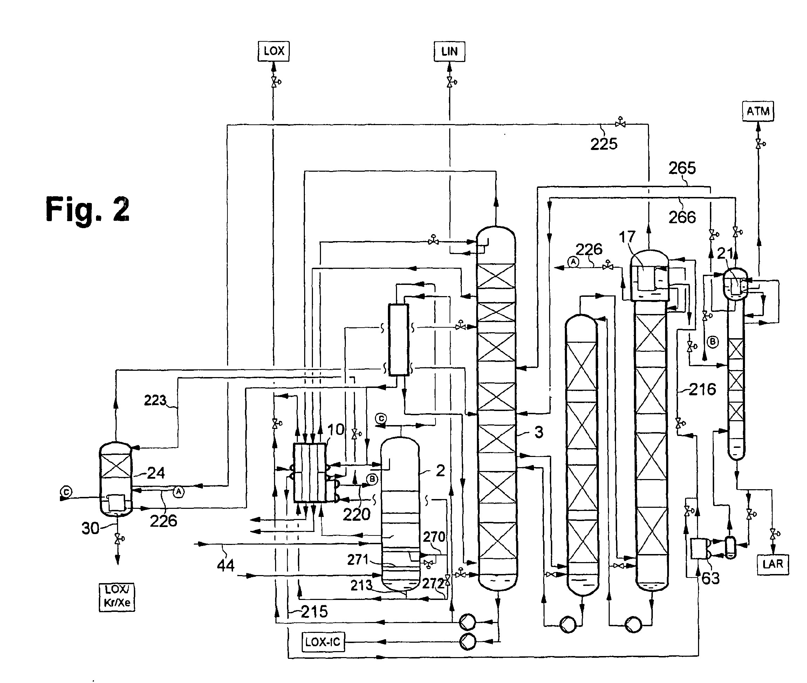

In dem Ausführungsbeispiel der Figur 1 wird die gesamte sauerstoffangereicherte Flüssigkeit, die in der Hochdrucksäule 2 erzeugt wird, vom Sumpf abgezogen (Leitung 13). Auf diese Weise ist eine relativ unkomplizierte Bauweise der Hochdrucksäule 2 möglich. **Figur 2** zeigt eine Abwandlung dieses Verfahrens, bei dem die Ausbeute an Krypton und Xenon weiter verbessert wird. Hier ist ein weiterer Zwischenabzug für Flüssigkeit 270 aus der Hochdrucksäule 2 vorgesehen, der durch etwa vier Sperrböden 271 vom Sumpfabzug 213 getrennt ist. Diese Böden halten den größten Teil der schwerflüchtigen Bestandteile, insbesondere Krypton und Xenon, im Sumpf der Hochdrucksäule 2 zurück. Der Strom 270 weist dadurch einen deutlich geringeren Krypton- und Xenon-Gehalt auf als die Sumpfflüssigkeit 213. Er wird über den Unterkühlungs-Gegenströmer 10 zum einen Teil 220 in den Verdampfungsraum des Kopfkondensators 21 der Reinargonsäule 22 geleitet. Der Rest 223 strömt zum Kopf der Krypton-Xenon-Anreicherungssäule 24. Damit ergibt sich sowohl in den aus dem Kopfkondensator 21 zur Niederdrucksäule 3 strömenden Fraktionen 265, 266 als auch in der Rücklaufflüssigkeit 223 eine besonders niedriger Krypton- und Xenon-Gehalt.

Beides führt zu einer besonders hohen Ausbeute bei der Krypton- und Xenongewinnung.

Ein Großteil (typischerweise etwa 90 mol%) des in der Luft enthaltenen Kryptons und Xenons strömt mit der Sumpfflüssigkeit 213 über den Unterkühlungs-Gegenströmer 10 und Leitung 215, den Reinargon-Verdampfer 63, die Leitung 216 und den ersten Kondensator-Verdampfer 17, sowie weiter über die Leitung 225 und 226 zur Krypton-Xenon-Anreicherungssäule 24 und wird dort praktisch vollständig mit dem Krypton-Xenon-Konzentrat 30 gewonnen.

Über die Bypass-Leitung 272 kann bei Bedarf ein Teil der Flüssigkeit 270 von dem Zwischenabzug zur Sumpfflüssigkeit 213 hinzugemischt werden. Zwischen diesem Zwischenabzug und der ersten Zwischenstelle, an der die Flüssigluft 44 aus der Innenverdichtung eingeleitet wird, befinden sich beispielsweise zwei bis 14, vorzugsweise etwa fünf bis acht theoretische Böden.

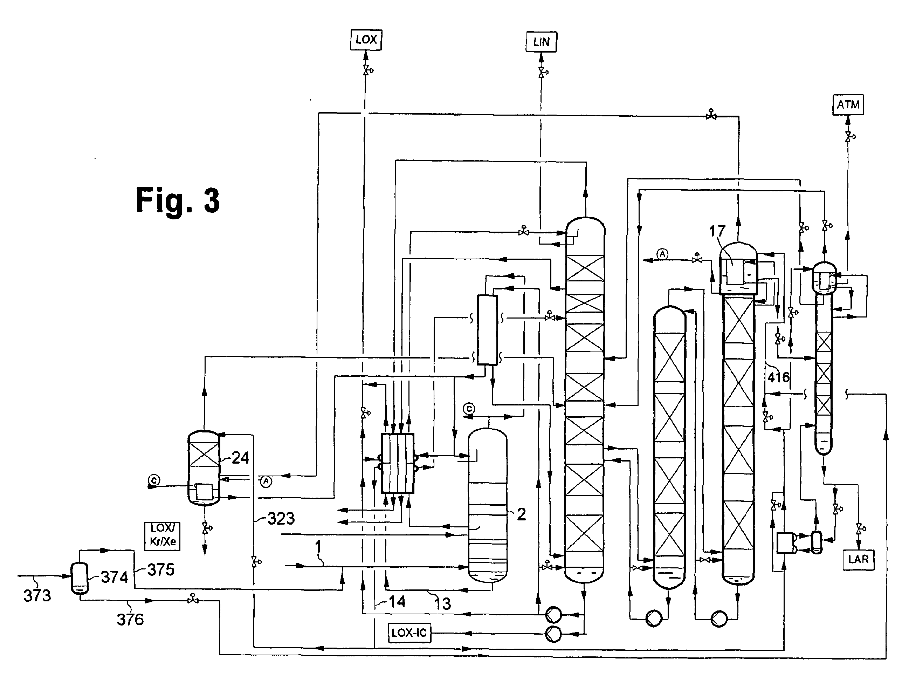

Während bei den Figuren 1 und 2 die Kältegewinnung nicht dargestellt ist, unterscheidet sich das in **Figur 3** gezeigte System durch die Kältegewinnung mittels einer Mitteldruckturbine von dem in Figur 1 skizzierten. Die Turbine selbst ist nicht dargestellt, sondern lediglich der von ihrem Austritt kommende Teilstrom 373, der als Zwei-Phasen-Gemisch vorliegt. Er wird in einen Abscheider (Phasentrenner) 274 eingeleitet. Der Dampf 375 aus dem Abscheider 374 wird wie üblich gemeinsam mit der Direktluft 1 in die Hochdrucksäule 2 eingespeist. Die Flüssigkeit 376, die einen erhöhten Gehalt an Krypton und Xenon aufweist, wird dagegen gemeinsam mit einem Teil der unterkühlten Sumpfflüssigkeit 14 der Hochdrucksäule 2 über Leitung 416 in den Verdampfungsraum des ersten Kondensator-Verdampfers 17 eingeleitet. Ein anderer Teil 323 der unterkühlten Sumpfflüssigkeit 14 wird auf den Kopf der Krypton-Xenon-Anreicherungssäule 24 aufgegeben. Selbstverständlich können die in Figur 3 dargestellten zusätzlichen Merkmale auch mit der Variante von Figur 2 kombiniert werden.

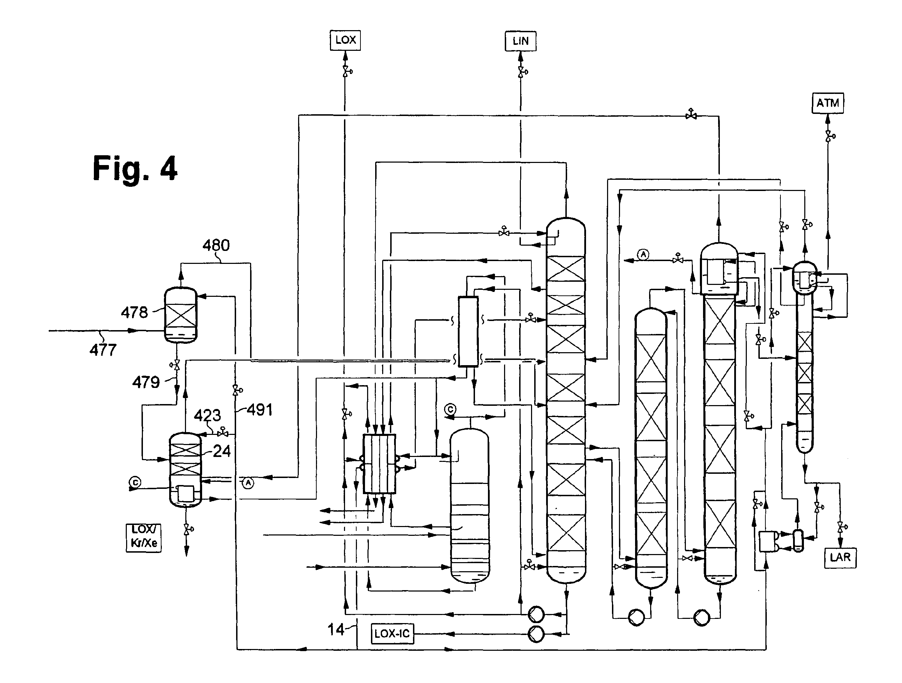

In **Figur 4** wird Verfahrenskälte mittels einer Niederdruckturbine erzeugt. Die vom Austritt dieser Turbine kommende Luft 477 steht unter etwa dem Betriebsdruck der Niederdrucksäule 3, wird aber hier nicht direkt in diese Säule geführt, sondern in eine Strippsäule 478 eingeleitet, in der die schwererflüchtigen Anteile in den Sumpf ausgewaschen werden. Die Sumpfflüssigkeit 479 wird dann auf der Krypton-Xenon-Anreicherungssäule 24 an einer geeigneten Zwischenstelle zugeführt. Sie bildet einen Teil der Rücklaufflüssigkeit für die Krypton-Xenon-Anreicherungssäule 24. Lediglich das Krypton- und Xenon-arme Kopfgas 480 der Strippsäule 478 fließt direkt in die Niederdrucksäule 3 und umgeht damit die Krypton-Xenon-Gewinnung. Auf den Kopf der Krypton-Xenon-Anreicherungssäule 24 und der Strippsäule 478 wird jeweils ein Teilstrom 423, 492 der unterkühlten Sumpfflüssigkeit 14 der Hochdrucksäule aufgegeben.

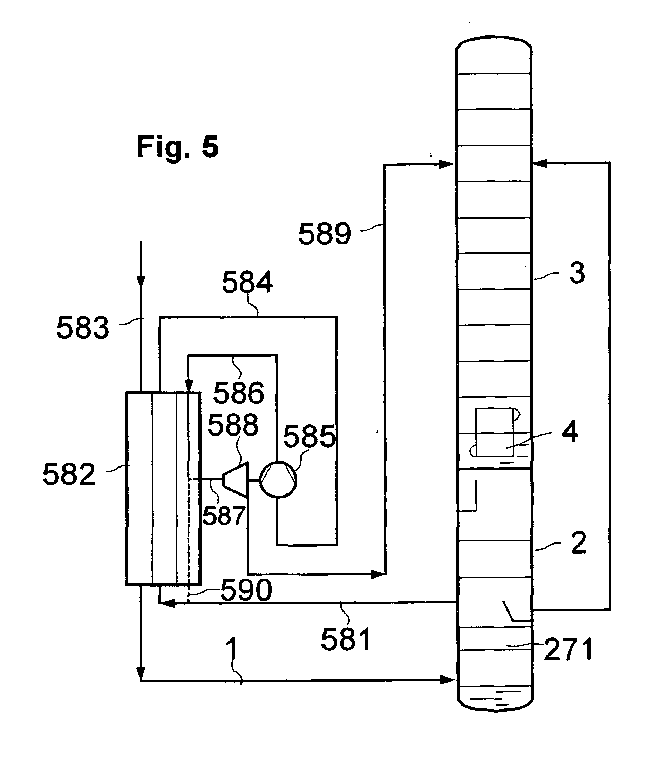

Hochdrucksäule 2, Niederdrucksäule 3 und Hauptkondensator 4 sind in **Figur 5** vereinfacht als Doppelsäule dargestellt. Kälte wird hier durch arbeitsleistende Entspannung einer gasförmigen Zwischenfraktion 581 von einer Zwischenstelle oberhalb der Sperrböden 271. Diese Fraktion kann im Hauptwärmetauscher 582 gegen abzukühlende Einsatzluft 583 angewärmt, über Leitung 584 einem Nachverdichter 585 zugeführt und weiter zum warmen Ende des Hauptwärmetauschers 582 geleitet (586) werden. Bei einer Zwischentemperatur wird sie über Leitung 587 dem Hauptwärmetauscher 582 entnommen und der arbeitsleistenden Entspannung 588 zugeführt. Die Turbine 588 treibt vorzugsweise über eine direkte mechanische Kopplung den Nachverdichter 585 an. Der arbeitsleistend entspannte Strom wird schließlich an geeigneter Stelle in die Niederdrucksäule 3 eingeleitet (589). Alternativ kann auf die Nachverdichtung und die vollständige Anwärmung verzichtet werden, indem der Strom über die gestrichelt dargestellte Leitung 590 im Hauptwärmetauscher 582 lediglich bis zu der Eintrittstemperatur der Turbine 588 angewärmt und dieser dann direkt zugeführt wird (Leitung 587).

Die Argon- und die Krypton-/Xenongewinnung sind in Figur 5 nicht dargestellt. Sie werden analog zu Figur 1 oder 2 durchgeführt. Eine Innenverdichtung ist bei Figur 5 nicht vorgesehen.

## Patentansprüche

1. Verfahren zur Gewinnung von Krypton und/oder Xenon durch Tieftemperaturzerlegung von Luft, bei dem
• verdichtete und gereinigte Einsatzluft (1) in ein Rektifiziersystem zur Stickstoff-Sauerstoff-Trennung eingeleitet wird, das mindestens eine Hochdrucksäule (2) und eine Niederdrucksäule (3) aufweist, wobei
• der Hochdrucksäule (2) eine krypton- und xenonhaltige Fraktion (13, 14, 15, 16, 416) entnommen wird,
• die krypton- und xenonhaltige Fraktion (13, 14, 15, 16, 416) in den Verdampfungsraum eines ersten Kondensator-Verdampfers (17) eingeleitet und dort partiell verdampft wird,
• eine Spülflüssigkeit (26, 226) aus dem Verdampfungsraum des ersten Kondensator-Verdampfers (17) abgezogen und
• einer Krypton-Xenon-Anreicherungssäule (24) zugeleitet wird und
• der Krypton-Xenon-Anreicherungssäule (24) ein Krypton-Xenon-Konzentrat (30) entnommen wird
**dadurch gekennzeichnet, dass**
• eine Flüssigkeit aus dem unteren Bereich der Krypton-Xenon-Anreicherungssäule (24) in einen zweiten Kondensator-Verdampfer (27) eingeleitet wird, der vom ersten Kondensator-Verdampfer (17) getrennt ist.

2. Verfahren nach Anspruch 1, **dadurch gekennzeichnet, dass** eine argonhaltige Fraktion (48) aus der Niederdrucksäule (3) in eine Rohargonrektifikation (18, 19) eingeleitet wird, wobei ein argonangereicherter Dampf (50) aus der Rohargonrektifikation (18, 19) in dem ersten Kondensator-Verdampfer (17) in indirekten Wärmeaustausch mit der verdampfenden krypton- und xenonhaltigen Fraktion (16) tritt.

3. Verfahren nach Anspruch 1 oder 2, **dadurch gekennzeichnet, dass** ein Teilstrom (44) der Einsatzluft in flüssigem Zustand an einer ersten Zwischenstelle in die Hochdrucksäule (2) eingespeist wird und von einer zweiten Zwischenstelle, die oberhalb dieser ersten Zwischenstelle angeordnete ist, eine sauerstoffhaltige Flüssigkeit (45) aus der Hochdrucksäule (2) abgezogen und in die Niederdrucksäule (3) eingeführt wird.

4. Verfahren nach Anspruch 3, **dadurch gekennzeichnet, dass** zwischen der ersten und der zweiten Zwischenstelle keine Stoffaustauschelemente angeordnet sind.

5. Verfahren nach einem der Ansprüche 1 bis 4, **dadurch gekennzeichnet, dass** in der Hochdrucksäule (2) Sperrböden (271) angeordnet sind, wobei die krypton- und xenonhaltige Fraktion (213) unterhalb der Sperrböden (271) abgezogen wird und eine sauerstoffangereicherte Flüssigkeit (270) oberhalb der Sperrböden entnommen wird.

6. Verfahren nach einem der Ansprüche 1 bis 5, **dadurch gekennzeichnet, dass** ein gasförmiger Strom (25, 225) aus dem Verdampfungsraum des ersten Kondensator-Verdampfers (17) abgezogen und ebenfalls der Krypton-Xenon-Anreicherungssäule (24) zugeleitet wird.

7. Verfahren nach einem der Ansprüche 1 bis 6, **dadurch gekennzeichnet, dass** ein Teilstrom (373) der Einsatzluft arbeitsleistend auf etwa den Betriebsdruck der Hochdrucksäule (2) entspannt und anschließend einer Phasentrennung (374) zugeführt wird und dass mindestens ein Teil des flüssigen Anteils (376) aus der Phasentrennung (374) der Krypton-Xenon-Anreicherungssäule (24) beziehungsweise dem Verdampfungsraum des ersten Kondensator-Verdampfers (17) zugeleitet wird.

8. Verfahren nach einem der Ansprüche 1 bis 7, **dadurch gekennzeichnet, dass** ein Teilstrom (477) der Einsatzluft arbeitsleistend auf etwa den Betriebsdruck der Niederdrucksäule entspannt und einer Strippsäule (478) zugeführt wird, wobei die Sumpfflüssigkeit (479) der Strippsäule (478) der Krypton-Xenon-Anreicherungssäule (24) zugeleitet wird.

9. Vorrichtung zur Gewinnung von Krypton und/oder Xenon durch Tieftemperaturzerlegung von Luft, mit
• einer Einsatzluftleitung (1) zur Einleitung verdichteter und vorgereinigter Einsatzluft in ein Rektifiziersystem zur Stickstoff-Sauerstoff-Trennung, das mindestens eine Hochdrucksäule (2) und eine Niederdrucksäule (3) aufweist,
• mit einer Entnahmeleitung (13, 14, 15, 16, 416) zur Entnahme einer krypton- und xenonhaltigen Fraktion aus der Hochdrucksäule (2), wobei
• die Entnahmeleitung (13, 14, 15, 16, 416) für die krypton- und xenonhaltige Fraktion mit dem Verdampfungsraum eines ersten Kondensator-Verdampfers (17) verbunden ist,
• eine Spülflüssigkeitsleitung (26, 226) mit dem Verdampfungsraum des Kondensator-Verdampfers (17) und mit einer Krypton-Xenon-Anreicherungssäule (24) verbunden ist und
• die Krypton-Xenon-Anreicherungssäule (24) eine Produktleitung (30) für ein Krypton-Xenon-Konzentrat aufweist.
**gekennzeichnet durch**
• einen zweiten Kondensator-Verdampfer (27), der vom ersten Kondensator-Verdampfer (17) getrennt ist und dessen Verdampfungsraum in Strömungsverbindung mit dem unteren Bereich der Krypton-Xenon-Anreicherungssäule (24) steht.

10. Vorrichtung nach Anspruch 9, **dadurch gekennzeichnet, dass** die Niederdrucksäule (3) über eine Argon-Übergangs-Leitung (48) mit einer Rohargonrektifikation (18, 19) verbunden ist und der Verflüssigungsraum des ersten Kondensator-Verdampfers (17) in Strömungsverbindung mit der Rohargonrektifikation (18, 19) steht.

## Claims

1. Process for producing krypton and/or xenon by low-temperature fractionation of air, in which
• compressed and cleaned charge air (1) is introduced into a rectification system for nitrogen-oxygen separation which at least includes a high-pressure column (2) and a low-pressure column (3),
• a krypton- and xenon-containing fraction (13, 14, 15, 16, 416) is removed from the high-pressure column (2),
• the krypton- and xenon-containing fraction (13, 14, 15, 16, 416) is introduced into the evaporation space of a first condenser-evaporator (17), where it is partially evaporated,
• a purge liquid (26, 226) is extracted from the evaporation space of the first condenser-evaporator (17), and
• is fed to a krypton-xenon enrichment column (24), and
• a krypton-xenon concentrate (30) is removed from the krypton-xenon enrichment column (24),
**characterized in that**
• a liquid from the lower region of the krypton-xenon enrichment column (24) is introduced into a second condenser-evaporator (27), which is separate from the first condenser-evaporator (17).

2. Process according to Claim 1, **characterized in that** an argon-containing fraction (48) from the low-pressure column (2) is introduced into a crude argon rectification stage (18, 19), an argon-enriched vapour (50) from the crude argon rectification stage (18, 19) being brought into indirect heat exchange with the evaporating krypton- and xenon-containing fraction (16) in the first condenser-evaporator (17).

3. Process according to Claim 1 or 2, **characterized in that** a part-stream (44) of the charge air is fed into the high-pressure column (2) in the liquid state at a first intermediate point, and an oxygen-containing liquid (45) is extracted from the high-pressure column (2) at a second intermediate point, which is arranged above this first intermediate point, and is introduced into the low-pressure column (3).

4. Process according to Claim 3, **characterized in that** there are no mass transfer elements between the first intermediate point and the second intermediate point.

5. Process according to one of Claims 1 to 4, **characterized in that** there are barrier plates (271) arranged in the high-pressure column (2), the krypton- and xenon-containing fraction (213) being extracted below the barrier plates (271) and an oxygen-enriched liquid (270) being removed above the barrier plates.

6. Process according to one of Claims 1 to 5, **characterized in that** a gaseous stream (25, 225) is extracted from the evaporation space of the first condenser-evaporator (17) and is likewise fed to the krypton-xenon enrichment column (24).

7. Process according to one of Claims 1 to 6, **characterized in that** a part-stream (373) of the charge air is expanded in a work-performing manner to approximately the operating pressure of the high-pressure column (2) and is then fed to a phase separation (374), and **in that** at least part of the liquid fraction (376) from the phase separation (374) is fed to the krypton-xenon enrichment column (24) or the evaporation space of the first condenser-evaporator (17).

8. Process according to one of Claims 1 to 7, **characterized in that** a part-stream (477) of the charge air is expanded in a work-performing manner to approximately the operating pressure of the low-pressure column and is fed to a stripping column (478), the bottom liquid (479) from the stripping column (478) being fed to the krypton-xenon enrichment column (24).

9. Apparatus for producing krypton and/or xenon by low-temperature fractionation of air, having
• a charge-air line (1) for introducing compressed and precleaned charge air into a rectification system for nitrogen-oxygen separation which at least includes a high-pressure column (2) and a low-pressure column (3),
• having a removal line (13, 14, 15, 16, 416) for removing a krypton- and xenon-containing fraction from the high-pressure column (2),
• the removal line (13, 14, 15, 16, 416) for the krypton- and xenon-containing fraction being connected to the evaporation space of a first condenser-evaporator (17),
• a purge-liquid line (26, 226) being connected to the evaporation space of the condenser-evaporator (17) and to a krypton-xenon enrichment column (24), and
• the krypton-xenon enrichment column (24) having a product line (30) for a krypton-xenon concentrate,
**characterized by**
• a second condenser-evaporator (27), which is separate from the first condenser-evaporator (17) and the evaporation space of which is in flow communication with the lower region of the krypton-xenon enrichment column (24).

10. Apparatus according to Claim 9, **characterized in that** the low-pressure column (2) is connected via an argon transfer line (48) to a crude argon rectification stage (18, 19), and the liquefaction space of the first condenser-evaporator (17) is in flow communication with the crude argon rectification stage (18, 19).

## Revendications

1. Procédé en vue de l'obtention de krypton et/ou de xénon par distillation cryogénique de l'air, lors duquel
• de l'air d'alimentation comprimé et purifié (1) est introduit dans un système de rectification en vue de la séparation azote-oxygène, qui présente au moins une colonne haute pression (2) et une colonne basse pression (3),
• une fraction contenant du krypton et du xénon (13, 14, 15, 16, 416) étant prélevée de la colonne haute pression (2),
• la fraction contenant le krypton et le xénon (13, 14, 15, 16, 416) étant introduite dans l'espace d'évaporation d'un premier condenseur-évaporateur (17) et y étant partiellement vaporisée,
• un liquide de rinçage (26, 226) étant retiré de l'espace d'évaporation du premier condenseur-évaporateur (17) et
• étant acheminé à un colonne d'enrichissement krypton-xénon (24) et
• un concentré krypton-xénon (30) étant prélevé de la colonne d'enrichissement krypton-xénon (24),
**caractérisée en ce**
**qu'**un liquide provenant du domaine inférieur de la colonne d'enrichissement krypton-xénon (24) est introduit dans un deuxième condenseur-évaporateur (27), qui est séparé du premier condenseur-évaporateur (17).

2. Procédé selon la revendication 1, **caractérisé en ce qu'**une fraction contenant de l'argon provenant de la colonne basse pression (3) est introduite dans une rectification d'argon brut (18, 19), une vapeur enrichie en argon (50) provenant de la rectification d'argon brut (18, 19) entrant en échange thermique indirect dans le premier condenseur-évaporateur (17) avec la fraction en cours d'évaporation, contenant du krypton et du xénon (16).

3. Procédé selon la revendication 1 ou 2, **caractérisé en ce qu'**un courant partiel (44) de l'air d'alimentation est injecté à l'état liquide en un premier emplacement intermédiaire dans la colonne haute pression (2) et **en ce qu'**un liquide, contenant de l'oxygène, (45), est évacué d'un deuxième emplacement intermédiaire, qui se trouve au-dessus de ce premier emplacement intermédiaire, et est introduit dans la colonne basse pression (3).

4. Procédé selon la revendication 3, **caractérisé en ce qu'**aucun élément d'échange n'est disposé entre le premier et le deuxième emplacements intermédiaires.

5. Procédé selon l'une quelconque des revendications 1 à 4, **caractérisé en ce que** sont installés, dans la colonne haute pression (2), des plateaux de blocage (271), la fraction contenant du krypton et du xénon (213) étant prélevée en dessous des plateaux de blocage (271) et un liquide enrichi en oxygène étant prélevé au-dessus des plateaux de blocage.

6. Procédé selon l'une quelconque des revendications 1 à 5, **caractérisé en ce qu'**un courant gazeux (25, 225) est prélevé de l'espace d'évaporation du premier condenseur-évaporateur (17) et est acheminé egalement à la colonne d'enrichissement krypton-xénon (24).

7. Procédé selon l'une quelconque des revendications 1 à 6, **caractérisé en ce qu'**un courant partiel (373) de l'air d'alimentation subit une détente en fournissant du travail à environ la pression de fonctionnement de la colonne haute pression (2) et est ensuite alimenté à une séparation de phases (374) et **en ce qu'**au moins une partie de la portion liquide (376) provenant de la séparation de phases (374) est acheminée à la colonne d'enrichissement krypton-xénon (24), respectivement à l'espace d'évaporation du condenseur-évaporateur (17).

8. Procédé selon l'une quelconque des revendications 1 à 7, **caractérisé en ce qu'**un courant partiel (477) de l'air d'alimentation subit une détente en fournissant du travail à environ la pression de fonctionnement de la colonne basse pression et est alimenté à une colonne de stripage (478), le liquide de puits (479) de la colonne de stripage (478) étant acheminé à la colonne d'enrichissement krypton-xénon (24).

9. Dispositif en vue de l'obtention de krypton et/ou de xénon par distillation cryogénique de l'air, avec
• un conduit d'air d'alimentation (1) en vue de l'introduction d'air d'alimentation comprimé et purifié dans un système de rectification en vue de la séparation azote-oxygène, qui présente au moins une colonne haute pression (2) et une colonne basse pression (3),
• un conduit de prélèvement (13, 14, 15, 16, 416) en vue du prélèvement d'une fraction contenant du krypton et du xénon provenant de la colonne haute pression (2),
• le conduit de prélèvement (13, 14, 15, 16, 416) pour la fraction contenant le krypton et le xénon étant relié à l'espace d'évaporation d'un premier condenseur-évaporateur (17),
• un conduit de liquide de rinçage (26, 226) étant relié à l'espace d'évaporation du condenseur-évaporateur (17) et à une colonne d'enrichissement krypton-xénon (24) et
• la colonne d'enrichissement krypton-xénon (24) présentant un conduit de produit (30) pour un concentré krypton-xénon,
**caractérisé**
• **par** un deuxième condenseur-évaporateur (27), qui est séparé du premier condenseur-évaporateur (17) et dont l'espace d'évaporation est en relation d'écoulement avec le domaine inférieur de la colonne d'enrichissement krypton-xénon (24).

10. Dispositif selon la revendication 9, **caractérisé en ce que** la colonne basse pression (3) est reliée par l'intermédiaire d'un conduit de transition d'argon (48) à une rectification d'argon brut (18, 19) et **en ce que** l'espace de liquéfaction du premier condenseur-évaporateur (17) est en relation d'écoulement avec la rectification d'argon brut (18, 19).
